# DEMANDE DE BREVET EUROPEEN

(11) **EP 4 730 172 A1**
(43) Date de publication de la demande: **22.04.2026**
(21) Numéro de dépôt: 25190747.3
(22) Date de dépôt: 21.07.2025
(51) Int. Cl.: G06F 21/45, G06F 21/57, H04L 9/40, H04L 9/32

(54) **PROCÉDÉ DE DIVULGATION D'UN CODE PIN À UN UTILISATEUR**

(30) Priorité: 16.10.2024 FR 2411226
(71) Demandeur: IDEMIA France, 92400 Courbevoie (FR)
(72) Inventeur: MARTRENCHAR, Paul, 92400 Courbevoie (FR); BIAU, Sandrine, 92400 Courbevoie (FR)
(74) Mandataire: Idemia

(57) **Abrégé**

Procédé de divulgation d'un code PIN à un utilisateur, le code PIN étant destiné à être utilisé en combinaison avec un jeton matériel d'authentification, tel qu'une carte à puce, configuré pour conditionner l'accès à un service à la connaissance du code PIN, le procédé comprenant les étapes suivantes mises en œuvre par un jeton matériel de déchiffrement : réception (4.10, 4.15), d'un chiffré (C) du code PIN, le chiffré du code PIN étant préalablement transmis par un serveur de stockage à un terminal de l'utilisateur, puis transmis par le terminal au jeton matériel de déchiffrement ; déchiffrement (4.12, 4.17) du chiffré (C) du code PIN de sorte à récupérer le code PIN ; et envoi (4.13, 4.18) au terminal d'une donnée de sortie dépendante du code PIN, le terminal étant configuré pour déduire le code PIN de la donnée de sortie et pour afficher le code PIN sur un écran d'affichage du terminal.

## Description

### DOMAINE DE L'INVENTION

La présente invention concerne un procédé de divulgation d'un code PIN à un utilisateur.

### ETAT DE LA TECHNIQUE

Un code PIN (Personal Identification Number) est un code de sécurité composé de chiffres, utilisé pour authentifier l'utilisateur d'une carte bancaire, d'une carte SIM ou d'une carte à puce. Par exemple, un code PIN protège l'accès à un compte bancaire lorsqu'une carte bancaire est utilisée pour un retrait ou un paiement. Sans ce code PIN, il est impossible d'effectuer des transactions, ce qui aide à prévenir les fraudes.

Un problème récurrent est l'oubli par un utilisateur de son code PIN. Dans le domaine bancaire, l'essor des néo-banques a entraîné une augmentation du nombre de cartes bancaires possédées par les utilisateurs ; ce problème d'oubli a donc tendance à survenir plus fréquemment.

Pour remédier à ce problème, il est connu un procédé de divulgation de code PIN qui permet aux titulaires de carte d'obtenir le code PIN de leur carte bancaire (initialement ou en rappel) directement sur leur application ou sur le site web de leur banque. Ce procédé fonctionne comme suit. Des codes PIN sont stockés par un serveur dans une base de données non pas en clair mais sous forme chiffrée (ceci est une condition de sécurité qui est imposé par certaines normes, notamment la norme PCI-CPP). Lorsqu'un titulaire de carte souhaite voir son code PIN, un dispositif sécurisé, généralement appelé HSM dans la littérature (pour Hardware Security Module) est utilisé par l'entité qui gère le serveur pour déchiffrer le chiffré de code PIN se trouvant dans la base de données ; le code PIN est ensuite transmis à l'utilisateur, par exemple sur son smartphone.

Or, un HSM est un équipement onéreux.

### EXPOSE DE L'INVENTION

Un problème à résoudre est de limiter le coût des ressources matérielles utilisées par l'entité qui gère le stockage de code PIN dans un contexte de divulgation de code PIN à un utilisateur qui en fait la demande, et ce sans perte de sécurité.

Ce problème est résolu par un procédé de divulgation d'un code PIN à un utilisateur, le code PIN étant destiné à être utilisé en combinaison avec un jeton matériel d'authentification, tel qu'une carte à puce, configuré pour conditionner l'accès à un service à la connaissance du code PIN, le procédé comprenant les étapes suivantes mises en œuvre par un jeton matériel de déchiffrement : réception d'un chiffré du code PIN, le chiffré du code PIN étant préalablement transmis par un serveur de stockage à un terminal de l'utilisateur, puis transmis par le terminal au jeton matériel de déchiffrement ; déchiffrement du chiffré du code PIN de sorte à récupérer le code PIN ; et envoi au terminal d'une donnée de sortie dépendante du code PIN, le terminal étant configuré pour déduire le code PIN de la donnée de sortie et pour afficher le code PIN sur un écran d'affichage du terminal.

Le procédé proposé, qui constitue un premier objet de la présente divulgation, peut en outre comprendre les caractéristiques suivantes, prises seules ou combinées entre elles à chaque fois que cela est techniquement possible.

De préférence, le déchiffrement du code PIN est réalisé à l'aide d'une clé de déchiffrement formant une paire de clés asymétriques avec une clé de chiffrement ayant servi à produire le chiffré du code PIN.

De préférence, le procédé comprend en outre les étapes suivantes mises en œuvre par le jeton matériel de déchiffrement : réception d'un mot de passe d'épreuve en association avec le chiffré du code PIN ; vérification de correspondance entre le mot de passe d'épreuve et un mot de passe mémorisé par le jeton matériel de déchiffrement, dans lequel la donnée de sortie est envoyée au terminal à condition que le mot de passe d'épreuve et le mot de passe mémorisé correspondent.

De préférence, le jeton matériel de déchiffrement est le jeton matériel d'authentification.

De préférence, le chiffré du code PIN est reçu via un canal de communication sans fil établi entre le jeton matériel de déchiffrement et le terminal, par exemple un canal de communication en champ proche, NFC, et la donnée de sortie est envoyée dans le canal de communication sans fil.

Dans un mode de réalisation, la donnée de sortie est le code PIN.

Dans un autre mode de réalisation, le procédé comprend en outre, après le déchiffrement, un chiffrement du code PIN par le jeton matériel de déchiffrement à l'aide d'une clé de chiffrement formant une paire de clés asymétriques avec une clé de déchiffrement détenue par le terminal, de sorte à produire la donnée de sortie.

De préférence, la clé de chiffrement utilisée par le jeton matériel de déchiffrement est une clé à usage unique ayant été générée par le terminal puis fournie au jeton matériel de déchiffrement de sorte à être utilisée uniquement pour le déchiffrement du chiffré du code PIN reçu.

De préférence, le serveur de stockage met en œuvre les étapes suivantes : réception d'une requête de divulgation de code PIN associée à un identifiant propre au jeton matériel de déchiffrement ; identification, dans une base de données associant des chiffrés et des identifiants de jetons matériels de déchiffrements, du chiffré du code PIN à l'aide de l'identifiant ; et envoi au terminal du chiffré du code PIN.

Un deuxième objet de la présente divulgation est un produit programme d'ordinateur comprenant des instructions de code de programme pour l'exécution des étapes du procédé constituant le premier objet de la présente divulgation, lorsque ce programme est exécuté par au moins un processeur.

Un troisième objet de la présente divulgation est un jeton matériel de déchiffrement pour divulguer un code PIN à un utilisateur, le code PIN étant destiné à être utilisé en combinaison avec un jeton matériel d'authentification, tel qu'une carte à puce, configuré pour conditionner l'accès à un service à la connaissance du code PIN, le jeton matériel de déchiffrement comprenant : une interface de communication propre à recevoir un chiffré du code PIN, le chiffré du code PIN étant préalablement transmis par un serveur de stockage à un terminal de l'utilisateur, puis transmis par le terminal au jeton matériel de déchiffrement ; et au moins un processeur configuré pour : déchiffrer le chiffré du code PIN de sorte à récupérer le code PIN, et pour causer l'envoi au terminal, via l'interface de communication, d'une donnée de sortie dépendante du code PIN, pour que le terminal déduise le code PIN de la donnée de sortie et affiche le code PIN sur un écran d'affichage du terminal.

Un quatrième objet de la présente de la divulgation est un système comprenant : le jeton matériel de déchiffrement constituant le troisième objet de la présente divulgation ; et un serveur de stockage configuré pour : recevoir une requête de divulgation de code PIN associée à un identifiant propre au jeton matériel de déchiffrement, identifier, dans une base de données associant des chiffrés et identifiants de jetons matériels de déchiffrements, le chiffré du code PIN à partir de l'identifiant, et envoyer le chiffré du code PIN au terminal.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un système comprenant notamment un jeton matériel de déchiffrement et un terminal.
La figure 2 illustre de façon schématique des composants interne du jeton matériel de déchiffrement et du terminal, dans un mode de réalisation.
La figure 3 est un organigramme d'étapes d'un procédé de personnalisation d'un jeton matériel de déchiffrement, selon un mode de réalisation.
La figure 4 est un organigramme d'étapes de procédés de stockage de code PIN selon deux modes de réalisations alternatifs.
La figure 5 est un organigramme d'étapes de procédés de divulgation de code PIN selon deux modes de réalisation alternatifs.

Sur l'ensemble des figures, les éléments similaires portent des références identiques.

### DESCRIPTION DETAILLEE DE L'INVENTION

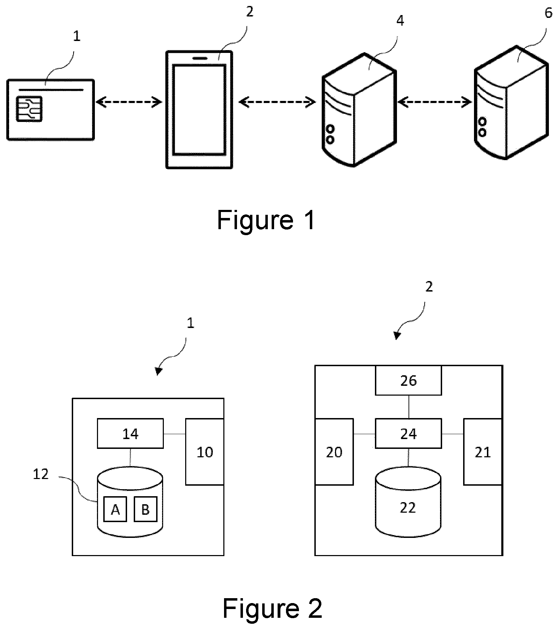

On a représenté sur la figure 1 un jeton matériel de déchiffrement 1, un terminal 2 d'utilisateur, un serveur de gestion de jetons 4 et un serveur de stockage de codes PIN 6.

En référence à la figure 2, le jeton matériel de déchiffrement 1 est un dispositif comprenant une interface de communication 10, une mémoire 12 et au moins un processeur 14.

L'interface de communication 10 est de préférence de type radio sans fil, par exemple NFC (« communication en champ proche »). L'interface de communication 10 est bidirectionnelle, dans le sens où elle permet d'envoyer des données et d'en recevoir.

La mémoire 12 est propre à stocker des données reçues, ainsi qu'un ou plusieurs programmes A, B comprenant des instructions de code.

Par exemple, le jeton matériel de déchiffrement 1 est une carte à puce ; les programmes précités sont dans ce contexte des applets A, B. La mémoire 12 stocke en particulier une applet de divulgation A, dont le fonctionnement sera détaillé plus loin.

Le ou chaque processeur 14 est adapté pour exécuter l'applet de divulgation A, et tout éventuelle autre applet B présente dans la mémoire 12.

Une fonction assurée par le jeton matériel de déchiffrement 1, et plus particulièrement par l'applet de divulgation A, est de participer à la divulgation d'un code PIN à un utilisateur.

Le code PIN a vocation à être utilisé par l'utilisateur en combinaison avec un jeton matériel d'authentification configuré pour conditionner l'accès à un service à la connaissance du code PIN. A cet effet, le jeton d'authentification comprend au moins un processeur configuré pour exécuter une applet d'authentification. Selon un premier exemple, l'applet d'authentification génère une signature en signant une donnée, et envoie la signature à un terminal. Dans cet exemple, un code d'épreuve est typiquement saisi sur le clavier d'un terminal communiquant avec le jeton d'authentification, et le terminal envoi le code d'épreuve avec la signature à un serveur configuré pour vérifier une correspondance entre le code d'épreuve et le code PIN. L'accès à la ressource ou au service concerné est autorisé à condition que le serveur conclut qu'il y a correspondance entre le code PIN et le code d'épreuve, et que la signature est valide. On notera que cette vérification de correspondance, qui est connue de l'état de la technique peut être réalisée sans pour autant nécessiter une mémorisation du code PIN dans une mémoire du jeton d'authentification (même si cette mémorisation reste possible).

Selon un deuxième exemple, l'applet d'authentification vérifie une correspondance entre un code PIN mémorisé dans une mémoire du jeton d'authentification et un code d'épreuve, le code d'épreuve étant par exemple saisi sur le clavier d'un terminal communiquant avec le jeton d'authentification. Dans ce deuxième exemple, L'accès à la ressource ou au service concerné est autorisé à condition que le processeur conclut qu'il y a correspondance entre le code PIN et le code d'épreuve.

Par exemple, le jeton matériel d'authentification est une carte à puce, par exemple un document d'identité biométrique ou bien une carte bancaire. Lorsque le jeton matériel d'authentification est une carte bancaire, le service peut être une transaction bancaire.

Dans un mode de réalisation, le jeton matériel d'authentification est le jeton matériel de déchiffrement 1 lui-même. Dans ce mode de réalisation, le jeton 1 comprend au moins deux applets : l'applet de divulgation A, qui va servir à divulguer un code PIN à un utilisateur, et une applet d'authentification B, qui va vérifier qu'un code PIN d'épreuve correspond à un code PIN mémorisé. Dans ce mode de réalisation, le code PIN mémorisé que l'applet d'authentification vient comparer avec le code PIN d'épreuve se trouve dans une zone mémoire qui n'est de préférence pas accessible par l'applet de divulgation A. Ainsi, les applets A et B fonctionnement de manière isolée l'une de l'autre.

Dans un autre mode de réalisation, le jeton d'authentification et le jeton de déchiffrement constituent deux dispositifs distincts, par exemple deux cartes à puce distinctes.

Le terminal 2 comprend une première interface de communication 20 pour communiquer avec le jeton matériel de déchiffrement 1, une deuxième interface de communication 21 pour communiquer avec le serveur de gestion de jetons 4, une mémoire 22, au moins un processeur 24 et un écran d'affichage 26.

La première interface de communication 20 est adaptée pour établir un canal de communication avec l'interface de communication 10 du jeton de déchiffrement 1.

La deuxième interface de communication 21 est de n'importe quel type, par exemple filaire (Ethernet) ou radio sans fil (cellulaire, tel que 3G/4G/5G, Wi-Fi, Bluetooth ou autre).

La mémoire 22 stocke notamment une application. Cette application est fournie par une entité exerçant un contrôle sur le serveur de gestion de jetons 4. Cette entité est par exemple une banque, auquel cas l'application est une application bancaire, permettant à un utilisateur d'administrer son jeton d'authentification et/ou ses comptes bancaires associés à l'aide du terminal 2.

L'application est un programme comprenant des instructions de code exécutable par le ou chaque processeur 24 du terminal 2. Le rôle de l'application sera décrit plus loin.

Le serveur de gestion de jetons 4 est administré par un fournisseur de services. En particulier, un service rendu par le fournisseur de service est le service sécurisé par le code PIN discuté précédemment. Le fournisseur de services est par exemple une banque, et le service une transaction bancaire. Lorsque les jetons matériels d'authentification sont des cartes à puce, ce serveur est généralement appelé en anglais CMS, pour Card Management System.

Le serveur de gestion de jeton 4 comprend une mémoire stockant une base de données associant des identifiants de jeton et des mots de passe respectifs.

Le serveur de stockage 6 comprend une interface de communication, une mémoire contenant une base de données, et au moins un processeur. Le serveur de stockage 6 peut être administré par une entité distincte du fournisseur de services.

La base de données contient des chiffrés de codes PIN respectivement associés à des identifiants de jetons matériels.

L'interface de communication du serveur de stockage 6 est adaptée pour communiquer avec le serveur de gestion de jetons.

Un procédé utilisant les dispositifs 1, 2, 4, 6 décrits précédemment comprend les phases suivantes :
- La personnalisation du jeton matériel de déchiffrement 1,
- Le stockage d'un chiffré de code PIN dans le serveur de stockage 6,
- La divulgation du code PIN à un utilisateur U du terminal 2 en faisant la demande.

### Personnalisation du jeton de déchiffrement

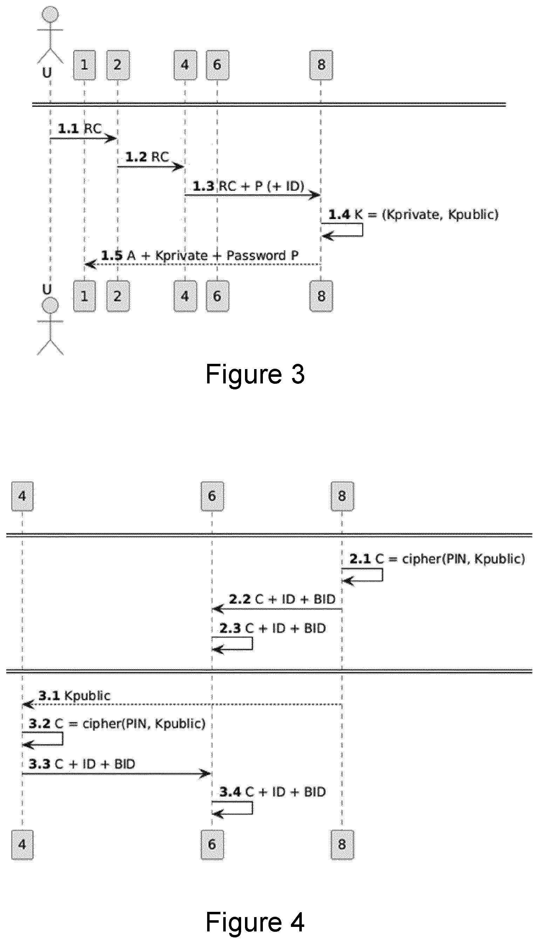

En référence à la figure 3, la personnalisation comprend les étapes suivantes dans un mode de réalisation.

Dans une étape 1.1, un utilisateur U du terminal 2 demande l'obtention d'un jeton de déchiffrement pour son usage personnel. L'utilisateur U réalise cette demande en interagissant avec l'application du terminal 2. En variante, l'utilisateur U pourrait réaliser cette demande en interagissant avec un autre dispositif, par exemple un distributeur automatique de billets ou un kiosque.

Dans une étape 1.2, l'application du terminal 2 (ou plus généralement le dispositif avec lequel l'utilisation interagit) commande l'envoi d'une requête de jeton RC au serveur de gestion de jetons 4.

Le serveur de gestions de jetons 4 reçoit la requête de jeton RC.

Le serveur de gestion de jetons 4 génère un mot de passe P et, le cas échéant, un identifiant de jeton ID associé à la requête RC.

Le serveur de gestion 4 mémorise dans sa mémoire le mot de passe P en association avec l'identifiant de jeton ID.

Dans une étape 1.3, le serveur de gestion de jetons 4 envoie les données suivantes à un centre de personnalisation 8 : la requête RC, avec le mode passe P et, le cas échéant, l'identifiant de jeton ID associés.

Au centre de personnalisation 8, une paire K de clés asymétriques est générée à l'aide d'un générateur approprié dans une étape 1.4. La paire de clés K comprend une clé de chiffrement Kpublic et une clé de déchiffrement Kprivate.

La paire de clés K est par exemple une paire de clés RSA ou d'un algorithme cryptographique à courbe elliptique. En variante, la paire de clés K est une paire de clés cryptographiques post-quantiques (PQ). Les opérations de chiffrement/déchiffrement avec de telles clés sont plus résistantes à des attaques réalisées à l'aide d'un ordinateur quantique, que des clés RSA ou des clés d'un algorithme cryptographique à courbe elliptique.

Dans une étape 1.5, le jeton de déchiffrement 1 est personnalisé, puis fourni à l'utilisateur U. Cette personnalisation comprenant notamment une écriture, dans la mémoire 12, de la clé de déchiffrement Kprivate, du mot de passe P, ainsi que de l'applet de divulgation A.

### Stockage de chiffré de code PIN

En référence à la figure 4, le stockage d'un chiffré de code PIN dans le serveur de stockage 6 comprend les étapes suivantes.

Dans une étape 2.1, un chiffreur du centre de personnalisation 8 est utilisé pour chiffrer un code PIN préalablement choisi à l'aide de la clé de chiffrement Kpublic. Le résultat de cette étape est un chiffré du code PIN, noté C. Sur la figure 4, la fonction de chiffrement utilisée est notée « cipher() ».

Dans une étape 2.2, le chiffré C du code PIN est envoyé depuis le centre de personnalisation 8 au serveur de stockage 6, avec l'identifiant de jeton ID qui avait été fourni antérieurement par le serveur de gestion de jetons 4.

Est également envoyé dans cette étape un identifiant BID propre au fournisseur de services qui administre le serveur de gestion de jetons 4 et qui fournit le service sécurisé par le code PIN.

Dans une étape 2.3, le serveur de stockage 6 mémorise, dans sa base de données, le chiffré C du code PIN en association avec les identifiants ID et BID.

L'identifiant ID permet d'identifier le jeton de déchiffrement 1 parmi d'autres jetons, notamment parmi d'autres jetons de déchiffrement. L'identifiant BID permet de distinguer le fournisseur de service qui administre le serveur 4 d'autres fournisseurs de services. Ainsi, la même base de données peut servir à stocker des chiffrés de code PIN se rapportant à des services rendus par différents fournisseurs de service, par exemple plusieurs banques.

Les étapes 2.1, 2.2 et 2.3 constituent un premier mode de réalisation.

Un deuxième mode de réalisation se substituant à ce premier mode de réalisation comprend les étapes suivantes.

Dans une étape 3.1, la clé de chiffrement Kpublic est envoyé depuis le centre de personnalisation au serveur de gestions de jetons 4.

Dans une étape 3.2, le serveur de gestion de jetons 4 chiffre un code PIN avec la clé de chiffrement clé Kpublic, de sorte à obtenir le chiffré C du code PIN.

Dans une étape 3.3, le serveur de gestion de jetons 4 envoie le chiffré C du code PIN ainsi que l'identifiant de jeton ID et l'identifiant BID propre au fournisseur de services qui fournit le service sécurisé par le code PIN, tels que discutés précédemment.

Dans une étape 3.4 (identique à l'étape 2.3), le serveur de stockage mémorise, dans sa base de données, le chiffré du code PIN en association avec les identifiants ID et BID.

Ainsi, les deux modes de réalisation diffèrent l'un de l'autre notamment par l'entité qui chiffre et envoi le code PIN au fournisseur de services. On comprend que les identifiants ID, BID sont envoyé au centre de personnalisation dans le premier mode de réalisation, mais que cet envoi n'est pas nécessaire dans le deuxième mode de réalisation.

### Divulgation de code PIN à un utilisateur

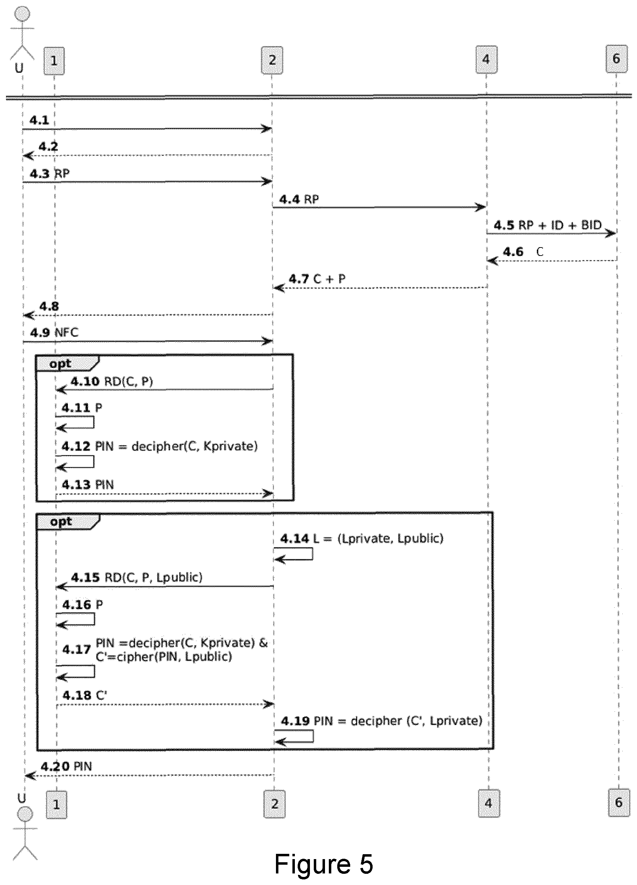

En référence à la figure 5, la divulgation de code PIN comprend les étapes suivantes.

Dans une étape 4.3, l'application du terminal 2 détecte une action utilisateur sur le terminal 2 qui révèle que l'utilisateur U demande qu'on lui divulgue le code PIN associé à son jeton d'authentification. Cette action comprend généralement l'appui sur un bouton dédié de l'interface graphique de l'application.

Dans une étape 4.4, réalisée lorsque l'application détecte cette action utilisateur, l'application commande au terminal 2 d'envoyer une requête RP en divulgation de code PIN au serveur de gestion de jetons.

Le serveur de gestion de jetons reçoit la requête RP émise à l'étape 4.4.

A partir de la requête RP, le serveur de gestion de jetons 4 détermine le mot de passe P et l'identifiant ID propre au jeton de déchiffrement 1 associé à l'émetteur de la requête RP.

De manière générale, la requête RP comprend une information permettant au serveur de gestion de jetons 4 d'identifier, dans la base de données contenue dans sa mémoire, le mot de passe P et l'identifiant ID mémorisé en association mutuelle. Typiquement, le serveur de gestion de jetons 4 peut mémoriser l'information en question en association avec un mot de passe P et un identifiant ID mémorisés en association mutuelle, par exemple au cours d'un procédé tel que décrit en figure 4.

Dans un mode de réalisation, l'information en question comprend un identifiant du jeton matériel d'authentification, par exemple les 4 derniers digits du PAN. L'information peut également comprendre une date d'expiration jeton matériel d'authentification (notamment lorsque ce jeton matériel d'authentification est une carte bancaire) ou un identifiant propriétaire géré par le fournisseur de service. Par exemple, l'application du terminal 2 peut être configurée pour présenter à l'utilisateur un visuel des jetons matériel d'authentification qui lui ont été attribués, et lui offrir la possibilité de sélectionner l'un de ces visuels. L'application du terminal envoie alors l'identifiant propriétaire associé au jeton d'authentification sélectionné dans la requête RP.

Dans une étape 4.5, le serveur de gestion de jetons 4 transmet la requête en divulgation RP avec les identifiants ID, BID.

Le serveur de stockage 6 reçoit la requête émise à l'étape 4.5.

Le serveur de stockage 6 recherche et sélectionne, dans la base de données associant des chiffrés de codes PIN avec des identifiants respectifs, un chiffré d'un code PIN qui est associé à l'identifiant ID reçu avec la requête RP, ayant été fourni par le serveur de gestion de jetons.

Si le serveur de stockage gère plusieurs fournisseurs de service, le serveur peut également utiliser l'identifiant BID lors de la recherche.

Dans une étape 4.6, le serveur de stockage 6 envoie au serveur de gestion de jetons 4 le chiffré C de code PIN trouvé dans la base de données.

Dans une étape 4.7, le serveur de gestion de jetons transmet au terminal 2 le chiffré C de code PIN, ainsi que le mot de passe P qu'il a déterminé. Il est à noter que la détermination du mot de passe P par le serveur de gestion de jetons peut être mise en œuvre n'importe quand après l'étape 4.4 et avant l'étape 4.7.

Le terminal 2 reçoit le chiffré du code PIN et le mode de passe P.

Dans une étape 4.8, l'application commande l'affichage, sur l'écran d'affichage 26 du terminal 2, d'un message invitant l'utilisateur à mettre le jeton matériel de déchiffrement 1 en communication avec le terminal 2. Par exemple, si l'interface de communication 10 du jeton matériel de déchiffrement 1 est de type NFC, ce message peut inviter à placer le jeton matériel de déchiffrement 1 à proximité du terminal, afin d'établir entre eux un canal de communication sans fil.

L'application détecte que ce canal de communication est établi avec le jeton matériel de déchiffrement 1 (étape 4.9).

Dans une étape 4.10, l'application commande au terminal d'envoyer au jeton matériel de déchiffrement 1, via le canal de communication établi, une requête en déchiffrement RD du chiffré C du code PIN. Cette requête en déchiffrement est ainsi accompagnée du chiffré du code PIN, ainsi que du mot de passe P.

Ces données sont communiquées à l'applet de divulgation A incluse dans le jeton matériel de déchiffrement 1.

Dans une étape 4.11, l'applet A vérifie une correspondance entre le mot de passe P reçu et le mot de passe ayant été mémorisé dans la mémoire du jeton de déchiffrement, lors de sa personnalisation préalable.

Si les deux mots de passe comparés correspondent, l'applet passe à l'étape 4.12. Sinon, l'applet ne met pas en œuvre l'étape 4.12, et peut dans ce cas retourner une erreur au terminal via le canal de communication.

Cette étape de vérification du mot de passe P améliore la sécurité du procédé de divulgation, comparativement à un procédé qui ne réaliserait pas cette étape. En effet, si un attaquant parvenait par exemple à accéder à la base de données du serveur de stockage 6, il ne pourrait pas obtenir le code PIN pour autant car il lui manquerait toujours le mot de passe P.

A l'étape 4.12, l'applet A déchiffre le chiffré C du code PIN à l'aide de la clé de déchiffrement Kprivate mémorisée dans la mémoire 12. Le résultat de ce déchiffrement est le code PIN (en clair).

Dans une étape 4.13, l'applet A commande à l'interface de communication 10 d'envoyer le code PIN au terminal 2, via le canal de communication établi auparavant.

Le terminal 2 reçoit le code PIN en clair.

Dans une étape 4.20, l'application commande l'affichage du code PIN sur l'écran d'affichage 26 du terminal 2.

L'utilisateur U du terminal 2 peut ainsi prendre connaissance du code PIN en observant l'écran d'affichage 26.

Les étapes 4.10 à 4.13 constituent un premier mode de réalisation du traitement réalisé par l'applet de divulgation A. On va maintenant décrire un deuxième mode de réalisation qui est également représenté sur la figure 5.

Dans une étape 4.14, l'application du terminal 2 génère une deuxième paire de clés L (distincte de la paire de clés K utilisée pour obtenir le chiffré du code PIN et le déchiffrer). La deuxième paire de clé comprend une clé publique Lpublic et une clé privée Lprivate.

Dans une étape 4.15, l'application commande au terminal 2 d'envoyer au jeton matériel de déchiffrement 1, via le canal de communication établi, la requête en déchiffrement RD du chiffré du code PIN. La requête en déchiffrement RD est accompagnée du chiffré C du code PIN, du mot de passe P, ainsi que de la clé public Lpublic. Cette étape 4.15 diffère donc de l'étape 4.10 du premier mode de réalisation décrit précédemment par le fait que la clé Lpublic est une donnée supplémentaire fournie au jeton de déchiffrement 1.

Ces données sont communiquées à l'applet de divulgation A incluse dans le jeton 1.

Dans une étape 4.16 (identique à l'étape 4.11 décrite précédemment), l'applet A vérifie une correspondance entre le mot de passe P reçu et le mot de passe ayant été mémorisé dans la mémoire du jeton de déchiffrement, lors de sa personnalisation préalable.

Si les deux mots de passe comparés correspondent, l'applet passe à l'étape 4.17. Sinon, l'applet ne met pas en œuvre l'étape 4.17, et peut dans ce cas retourner une erreur au terminal 2 via le canal de communication.

A l'étape 4.17 (identique à l'étape 4.12) l'applet A déchiffre le chiffré du code PIN à l'aide de la clé de déchiffrement Kprivate mémorisée dans la mémoire 12 du jeton de déchiffrement 1. Le résultat de ce déchiffrement est le code PIN (en clair). Ensuite, l'applet A chiffre à nouveau le code PIN, mais cette fois à l'aide de la clé publique Lpublic fournie par le terminal 2. Ainsi, le résultat de cette étape est un deuxième chiffré C' du code PIN, différent du chiffré C qui était initialement stocké par le serveur de stockage de codes PIN.

Dans une étape 4.18, l'applet A commande à l'interface de communication 10 d'envoyer le deuxième chiffré C' du code PIN au terminal 2, via le canal de communication établi auparavant.

Le terminal reçoit ce deuxième chiffré C'.

Dans une étape 4.19, l'application du terminal 2 déchiffre le deuxième chiffré C' à l'aide de la clé privée Lprivate, ce qui lui permet de récupérer le code PIN en clair.

L'étape d'affichage 4.20 est ensuite mise en œuvre comme dans le premier mode de réalisation.

En définitive, dans les deux modes de réalisations discutés, le terminal 2 reçoit du jeton de déchiffrement une donnée de sortie à partir de laquelle le terminal peut déduire le code PIN. Dans le premier mode de réalisation, cette donnée de sortie est le code PIN lui-même. Dans le deuxième mode de réalisation, cette donnée de sortie est le deuxième chiffré C', et l'application du terminal 2 déduit le code PIN par déchiffrement de ce deuxième chiffré à l'aide de la clé Lprivate que le terminal 2 possède.

De préférence la paire de clés L est à usage unique (pour une seule divulgation de code PIN).

Le deuxième mode de réalisation apporte toutefois un niveau de sécurité supplémentaire, car il permet de se protéger contre des attaques qui consisteraient à inspecter les données qui transitent dans le canal de communication établi entre le jeton de déchiffrement 1 et le terminal 2 (dont le code PIN en clair dans le premier mode de réalisation).

### Autres modes de réalisation

Jusqu'ici, il a été décrit des modes de réalisation dans lesquels le chiffré C transite par le serveur de gestion de jetons 4 avant de parvenir au terminal 2 ; autrement dit, le chiffré C est transmis par le serveur de stockage 6 au terminal 2 de manière indirecte, en passant par le serveur de gestion de jetons 4. Toutefois, ceci n'est pas obligatoire. Dans d'autres modes de réalisation, le chiffré C peut être transmis par le serveur de stockage 6 au terminal 2 de manière directe (sans passer par le serveur de gestion de jetons 4).

Dans un mode de réalisation, il peut être prévu que le jeton de déchiffrement 1 soit un jeton d'identification biométrique. Ce jeton d'identification biométrique comprend un capteur biométrique, par exemple un capteur d'empreinte digitale. Le jeton d'authentification peut n'autoriser l'établissement du canal de communication avec le terminal qu'en cas de correspondance entre une donnée biométrique d'épreuve, acquise par le capteur biométrique, et une donnée biométrique de référence mémorisée par le jeton de déchiffrement.

Jusqu'ici il a été décrit des modes de réalisation dans lesquels le code PIN est chiffré puis déchiffré à l'aide d'une paire de clés asymétrique. Dans un autre mode de réalisation, la cryptographie symétrique est utilisée comme suit :
- A l'étape 2.1, le code PIN est chiffré à l'aide d'une clé symétrique.
- La clé symétrique est divisée en deux portions de clés : une première portion de clé, et une deuxième portion de clé.
- Le serveur de stockage de codes PIN mémorise la première portion de clé, en association avec le chiffré du code PIN.
- La deuxième portion de clé est mémorisée par le jeton de déchiffrement.
- Aux étapes 4.6, 4.7 et 4.10/4.15, le serveur transmet la deuxième portion de clé avec le chiffré du code PIN.
- A l'étape 4.12/4.17, l'applet reconstitue la clé symétrique à partie de la première portion mémorisée dans le jeton de déchiffrement et la deuxième portion de clé fournie par le serveur de gestion de codes PIN, avant d'utiliser cette clé symétrique pour déchiffrer le chiffré du code PIN.

Dans un autre mode de réalisation :
- A l'étape 2.1, le code PIN est chiffré à l'aide d'une clé symétrique S.
- La clé asymétrique Kprivate est mémorisée par le jeton de déchiffrement.
- Le serveur de stockage de codes PIN mémorise un chiffré de la clé symétrique S à l'aide de la clé asymétrique Kpublic, en association avec le chiffré du code PIN.
- Aux étapes 4.6, 4.7 et 4.10/4.15, le serveur transmet le chiffré de la clé symétrique S avec le chiffré du code PIN.
- A l'étape 4.12/4.17, l'applet déchiffre le chiffré de la clé symétrique S à l'aide de la clé asymétrique Kprivate, avant d'utiliser la clé symétrique S pour déchiffrer le chiffré du code PIN.

Dans un autre mode de réalisation :
- Le jeton de déchiffrement détient une clé symétrique principale.
- Une phrase de passe est communiquée à l'utilisateur.
- La clé de chiffrement utilisée à l'étape 2.1 est une clé secondaire dérivée de la clé symétrique principale à l'aide de la phrase de passe.
- L'utilisateur est invité à saisir la phrase de passe, typiquement sur le terminal 2, et la phrase de passe saisie est transmise au jeton de déchiffrement avec les autres données.
- Le jeton de déchiffrement obtient la clé secondaire en appliquant le même traitement de dérivation, à partir de la clé symétrique principale et la phrase de passe saisie.
- A l'étape 4.12/4.17, l'applet utilise la clé secondaire ainsi obtenue pour déchiffrer le chiffré du code PIN.

Dans un autre mode de réalisation :
- Le jeton de déchiffrement comprend un capteur biométrique (par exemple un capteur d'empreinte digitale).
- L'utilisateur est enrôlé à titre préliminaire, c'est-à-dire qu'un gabarit biométrique de l'utilisateur, obtenu à l'aide du capteur biométrique ou d'un autre capteur biométrique, est obtenu.
- Ce gabarit biométrique est utilisé comme clé symétrique pour chiffrer le code PIN à l'étape 2.1 et pour déchiffrer son chiffré côté applet. L'utilisateur est soumis à un test biométrique à l'aide du capteur biométrique avant le déchiffrement du chiffré du code PIN. Ce déchiffrement n'est réalisé que si le test est positif, typiquement que si une donnée biométrique de l'utilisateur fraichement acquise à l'aide du capteur biométrique pendant le test, correspond au gabarit biométrique de l'utilisateur.

Typiquement, le gabarit biométrique est stocké dans une mémoire du jeton matériel de déchiffrement.

En dépit de ses avantages en termes de sécurité, l'utilisation du mot de passe P dans le procédé reste optionnelle.

## Revendications

1. Procédé de divulgation d'un code PIN à un utilisateur, le code PIN étant destiné à être utilisé en combinaison avec un jeton matériel d'authentification, tel qu'une carte à puce, configuré pour conditionner l'accès à un service à une connaissance du code PIN, le procédé comprenant les étapes suivantes mises en œuvre par un jeton matériel de déchiffrement :
• réception (4.10, 4.15) d'un chiffré (C) du code PIN, le chiffré du code PIN étant préalablement transmis par un serveur de stockage à un terminal de l'utilisateur, puis transmis par le terminal au jeton matériel de déchiffrement,
• déchiffrement (4.12, 4.17) du chiffré (C) du code PIN de sorte à récupérer le code PIN,
• envoi (4.13, 4.18) au terminal d'une donnée de sortie dépendante du code PIN, le terminal étant configuré pour déduire le code PIN de la donnée de sortie et pour afficher le code PIN sur un écran d'affichage du terminal.

2. Procédé selon la revendication précédente, dans lequel le déchiffrement (4.12, 4.17) du code PIN est réalisé à l'aide d'une clé de déchiffrement formant une paire de clés asymétriques avec une clé de chiffrement ayant servi à produire le chiffré du code PIN.

3. Procédé selon l'une quelconque des revendications précédentes, comprenant en outre les étapes suivantes mises en œuvre par le jeton matériel de déchiffrement :
• réception d'un mot de passe d'épreuve en association avec le chiffré du code PIN,
• vérification de correspondance (4.11, 4.16) entre le mot de passe d'épreuve et un mot de passe mémorisé par le jeton matériel de déchiffrement,
• dans lequel la donnée de sortie est envoyée au terminal à condition que le mot de passe d'épreuve et le mot de passe mémorisé correspondent.

4. Procédé selon l'une quelconque des revendications précédentes, dans lequel le jeton matériel de déchiffrement est le jeton matériel d'authentification.

5. Procédé selon l'une quelconque des revendications précédentes, dans lequel le chiffré du code PIN est reçu via un canal de communication sans fil établi entre le jeton matériel de déchiffrement et le terminal, par exemple un canal de communication en champ proche, NFC, et la donnée de sortie est envoyée dans le canal de communication sans fil.

6. Procédé selon l'une quelconque des revendications 1 à 5, dans lequel la donnée de sortie est le code PIN.

7. Procédé selon l'une quelconque des revendications 1 à 5, comprenant en outre :
• après le déchiffrement, chiffrement du code PIN par le jeton matériel de déchiffrement à l'aide d'une clé de chiffrement formant une paire de clés asymétriques avec une clé de déchiffrement détenue par le terminal, de sorte à produire la donnée de sortie.

8. Procédé selon la revendication précédente, dans lequel la clé de chiffrement utilisée par le jeton matériel de déchiffrement est une clé à usage unique ayant été générée par le terminal puis fournie au jeton matériel de déchiffrement de sorte à être utilisée uniquement pour le déchiffrement du chiffré du code PIN reçu.

9. Procédé selon l'une quelconque des revendications précédentes, dans lequel le serveur de stockage met en œuvre les étapes suivantes :
• réception d'une requête de divulgation de code PIN associée à un identifiant propre au jeton matériel de déchiffrement,
• identification, dans une base de données associant des chiffrés et des identifiants de jetons matériels de déchiffrements, du chiffré du code PIN à l'aide de l'identifiant,
• envoi au terminal du chiffré du code PIN.

10. Produit programme d'ordinateur comprenant des instructions de code de programme pour l'exécution des étapes du procédé selon l'une des revendications précédentes, lorsque ce programme est exécuté par au moins un processeur.

11. Jeton matériel de déchiffrement (1) pour divulguer un code PIN à un utilisateur, le code PIN étant destiné à être utilisé en combinaison avec un jeton matériel d'authentification, tel qu'une carte à puce, configuré pour conditionner l'accès à un service à une connaissance du code PIN, le jeton matériel de déchiffrement comprenant :
• une interface de communication (10) propre à recevoir un chiffré du code PIN, le chiffré du code PIN étant préalablement transmis par un serveur de stockage à un terminal de l'utilisateur, puis transmis par le terminal au jeton matériel de déchiffrement,
• au moins un processeur (14) configuré pour :
• déchiffrer le chiffré du code PIN de sorte à récupérer le code PIN,
• causer l'envoi au terminal, via l'interface de communication, d'une donnée de sortie dépendante du code PIN, pour que le terminal déduise le code PIN de la donnée de sortie et affiche le code PIN sur un écran d'affichage du terminal.

12. Système comprenant :
• un jeton matériel de déchiffrement (1) selon la revendication précédente,
• un serveur de stockage (6) configuré pour :
• recevoir une requête de divulgation de code PIN associée à un identifiant propre au jeton matériel de déchiffrement,
• identifier, dans une base de données associant des chiffrés et identifiants de jetons matériels de déchiffrements, le chiffré du code PIN à partir de l'identifiant
• envoyer le chiffré du code PIN au terminal.
